# EUROPEAN PATENT SPECIFICATION

(11) **EP 1 616 747 B1**
(45) Date of publication and mention of the grant of the patent: **01.12.2010**
(21) Application number: 05103774.5
(22) Date of filing: 05.05.2005
(51) Int. Cl.: B60N 2/22, B60R 22/10

(54) **Vehicle safety belt clamp for association with a child seat**
Klemme für einen Fahrzeugsicherheitsgurt zur Verwendung in einem Kindersitz
Pince pour une ceinture de sécurité à utiliser avec un siège pour enfant

(30) Priority: 12.07.2004 IT MI20040337 U
(43) Date of publication of application: 18.01.2006
(73) Proprietor: ARTSANA S.p.A., 22070 Grandate (Como) (IT)
(72) Inventor: Catelli, Pietro, Dr., 22100 Como (IT)
(74) Representative: Ripamonti, Enrico

(56) References cited:
- EP-A- 0 184 172
- EP-A- 1 199 213
- GB-A- 947 110
- US-A- 5 286 090

## Description

The present invention relates to a child seat clamp for retaining a safety belt of a vehicle on which the seat is mounted, in accordance with the introduction to the main claim.

EP 1199213 A, which is considered the closest prior art, shows such a clamp.

A child seat is retained on the vehicle seat on which it is mounted by a vehicle safety belt, said belt cooperating with retention slots provided in the rigid structure of the child seat. This structure can be an integral part of the child seat and be irremovably fixed to a support element on which the child is placed or be separable from this support element while remaining associated with said vehicle seat, retained by the safety belt, even when the support element is removed from it.

Preferably, the safety belt cooperates with a pincer type retention element, i.e. the aforesaid clamp, disposed in a corresponding retention seat for said belt. This clamp usually comprises an elongate element, eccentric to a support and rotation pivot, positioned in proximity to a counteracting element with which this elongate element cooperates to retain the safety belt in a first working position; for this purpose, between the retention element and the elongate element a recess is present which is freed when the elongate element is brought into a second working position, distant from said counteracting element. The safety belt is placed in this recess and is then retained by cooperation with said pincer-acting elements when the elongate element is in its said first working position. Usually, even when the safety belt is absent, the elongate element is in its first working position and acts against the counteracting element; the movement which brings this elongate element into its second working position to create the recess for passage of the safety belt is obtained either directly by pushing the safety belt against the elongate element, or by acting on a suitable gripping member associated with said element. In both cases, this latter rotates eccentrically about its support pivot (or jointly with it) to create the said recess and to enable the safety belt to be placed in it. Return to the first working position results in clamping of the safety belt and its retention, said return occurring automatically by virtue of an elastic element acting on said elongate element which forces it into its first working position and opposes its passage into said second working position.

Clamps of known type usually form an integral part of the child seat and/or present numerous components, resulting in lengthy manufacturing, assembly and mounting times for the child seat, with corresponding high costs.

An object of the present invention is to provide a child seat clamp able to cooperate with a safety belt of a vehicle seat on which said child seat is disposed, said clamp representing an improvement on those of the state of the art.

A particular object of the invention is to provide a clamp of the stated type which has a small number of components, so facilitating its manufacture and limiting its production and assembly costs.

A further object is to provide a clamp of the stated type which is independent of the child seat, enabling it to be replaced if damaged or defective in use.

These and further objects which will be apparent to the expert of the art are attained by a clamp in accordance with the accompanying claims.

The present invention will be more apparent from the accompanying drawings, which are provided by way of non-limiting example and in which:

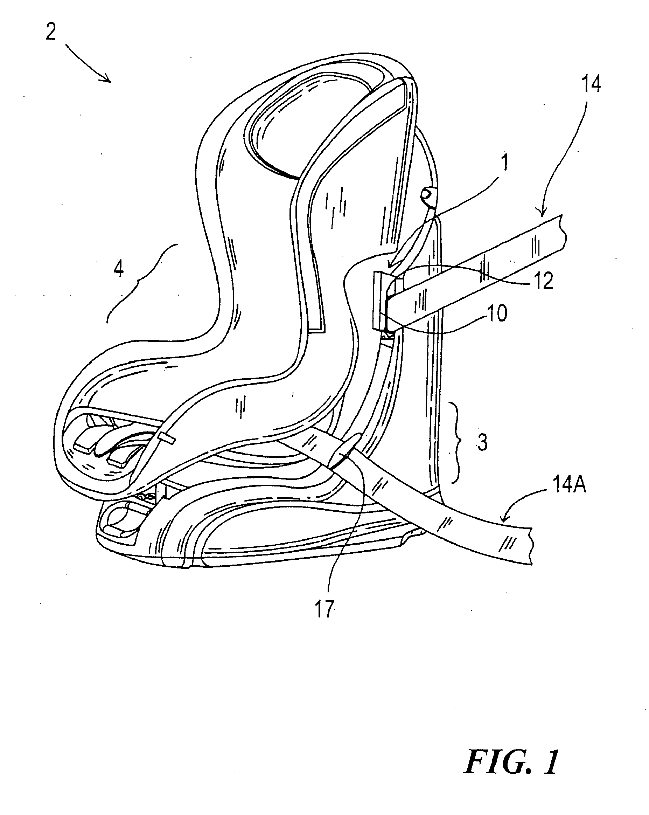

Figure 1 is a partly exploded view of a child seat provided with a clamp according to the invention;

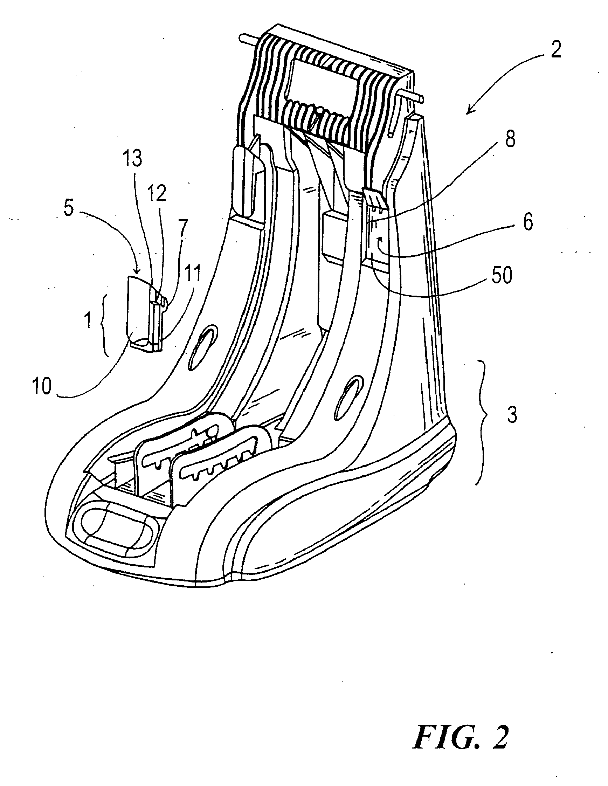

Figure 2 is an exploded view of part of the child seat of Figure 1 and of the clamp according to the invention;

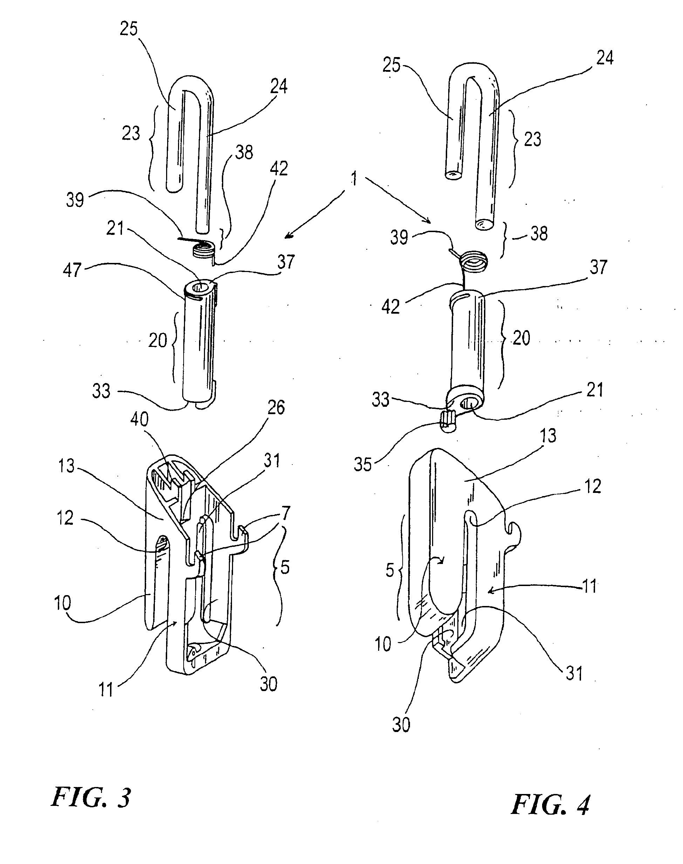

Figure 3 is an exploded rear perspective view of a clamp according to the invention;
Figure 4 is an exploded front perspective view of the clamp of Figure 1;

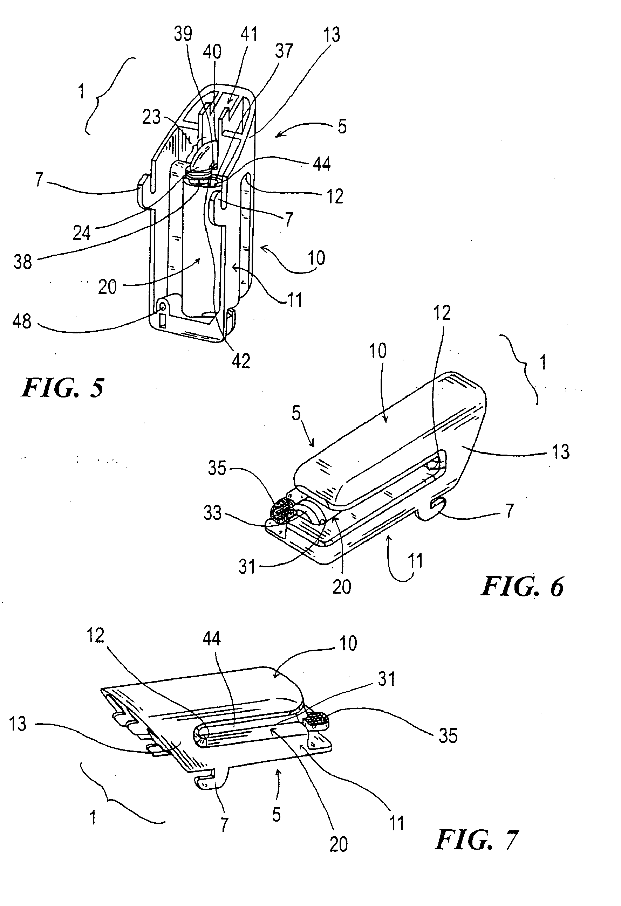

Figure 5 is a rear perspective view of the assembled clamp of Figure 3;
Figure 6 is a front perspective view of the assembled clamp of Figure 5; and
Figure 7 is a side perspective view of the clamp of Figure 6.

With reference to said figures, these show a clamp 1 to be associated with an automobile child seat 2 which, in the embodiment shown in the figures, comprises a rigid base 3 removably carrying a child support 4. The type of child seat shown is not to be considered limitative for the purposes of the invention.

The clamp 1 comprises a body 5 to be engaged in a housing 6 provided in the base 3 of the child seat 2. For this purpose, the body 5 comprises substantially L-shaped projections 7 to snap-cooperate with recesses 8 provided in said housing 6; in this manner the body 5 can be easily coupled to the base 3 or separated from it to be replaced.

The body 5 is substantially of U shape, comprising a first arm 10 and a second arm 11, between the two arms there being a recess 12 defined upperly by a shoulder 13 joining said arms 10 and 11. The purpose of the recess 12 is to receive a safety belt 14 of the vehicle on which the child seat 2 is to be used. Specifically, the belt rear part 14 is positioned in the recess 12, the belt front part 14A being positioned in correspondence with a fixed securing element 17, fixed in known manner to the base 3 of the child seat 2.

An elongate element 20 is disposed in the recess 12 in front of the first arm 10 of the body 5 of the clamp 1, and presents a cylindrical through hole 21 formed eccentric to a longitudinal central axis w of the element 20. A retention pin 23 substantially of U-shape presenting opposing arms 24 and 25 is disposed in said hole 21, the first arm 24 being inserted into the through hole 21 of the elongate element 20. The second arm 25 is inserted into a hole 26 provided in the first arm 10 of the body 5 of the clamp 1.

The elongate element 20 is inserted into a seat 30 provided in the second arm 11 of the body 5 of the clamp 1 and, as stated, projects into the cavity recess 12 of this latter via a slot or aperture 31 provided in said seat 30. At a first end 33, the elongate element 20 presents, projecting radially from said element in a radial position, a flat gripping portion 35 to be used to rotate the elongate element 20 about the first arm 24 of said pin 23.

In correspondence with a second end 37 of the elongate element 20 a spiral spring 38 is positioned to oppose said rotation of the element 20 about the arm 24 of the pin 23. The spring 38 comprises a first end 39 cooperating with a shoulder 40 bounding the access 41 to the seat 30 for the retention pin 23 in the first arm 10 of the body 5 of the clamp 1; this spring comprises a second end 42 cooperating with a stop element 44 projecting form the second end 37 of the element 20. In this manner, the spring 38 opposes the rotation of the elongate element 20 about the first arm 24 of the pin 23 when said element is moved from a working position (first working position) in which it is substantially in contact with the first arm 10 of the body 5 of the clamp 1 to a working position (second working position) in which it is spaced from said first arm to free the access to the recess 12 for the safety belt 14. Passage from the first to the second position is achieved by acting on said gripping portion 35 in order to insert the belt 14 into said recess; on releasing the portion 35, the spring 38 returns the elongate element to its first working position, in this latter the cooperation between said element and the arm 10 of the body 5 which faces it defines a sort of pincer which tightens onto the safety belt and retains it securely associated with the clamp.

Preferably, to increase friction between the safety belt and the elongate element, this latter is at least partly covered with a rubber layer 47.

The body 5 of the clamp 1 can also be screw-fixed into the housing 6 of the child seat 2, said screw being inserted though a corresponding hole 48 provided in said body and into a hole provided in the housing 6.

The clamp of the invention comprises a small number of components and is therefore simple to assemble. It also represents a structure which is independent of the child seat 2 and can be easily mounted on it, and easily removed from it if necessary.

## Claims

1. A clamp for a vehicle child seat to contain a child during transport thereof, said clamp (1) adapted to retain a safety belt (14) of said vehicle when the child seat is mounted thereon and comprising an elongate element (20), rotating about and eccentric to a support pivot (24), positioned in proximity to a counteracting element (10) with which said elongate element cooperates when in its first working position to retain said safety belt (14) inserted in a recess (12) present between said elongate element (20) and said counteracting element (10), the elongate element (20) being able to assume a second working position in which it is spaced from said counteracting element (10) to free the access to said recess (12) for the safety belt (14), the clamp (1) comprising a body (5) independent of the child seat (2), said body (5) presenting a substantially U shape and having a first arm (10) and a second arm (11), the first arm (10) being positioned in front of the elongate element and acting as a counteracting element to retain the safety belt in pincer manner when said elongate element (20) is in its first working position, said elongate element (20) being disposed in a seat (30) of the second arm (11) of said body (5) and projecting from this seat via an aperture (31) present in said recess (12) between the arms (10, 11) of said body, **characterised in that** the elongate element (20) comprises an end projecting part (35) acting as a gripping portion for rotating said element about the relative support pivot (24).

2. A clamp as claimed in claim 1, **characterised in that** the support pivot for the elongate element (20) is a first arm (24) of a U-shaped pin (23), said first arm being inserted in a hole (21) of said elongate element (20) provided eccentric to a longitudinal central axis (W) of this latter, said pin (23) comprising a second arm (25) inserted in a corresponding seat (26) of the first arm (10) of the body (5) of the clamp (1).

3. A clamp as claimed in claim 2, **characterised in that** an elastic return element (38) is mounted on said first arm (24) of the pin (23) to oppose passage of the elongate element from the first working position to the second position and to return said element to said first position after it has moved into said second working position.

4. A clamp as claimed in claim 3, **characterised in that** the elastic return element is a spiral spring (38).

5. A clamp as claimed in claim 4, **characterised in that** said spring comprises free ends (39, 42), a first end (39) bearing on a part (40) of the clamp body (5), a second end (42) being rigid with the elongate element (20).

6. A clamp as claimed in claim 1, **characterised in that** the elongate element (20) is at least partly covered with a rubber layer (47) which cooperates with the safety belt (14).

7. A clamp as claimed in claim 1, **characterised in that** its body (5) comprises projections (7) arranged to snap cooperate with corresponding seats (8) in a rigid portion (3) of the child seat.

## Patentansprüche

1. Halter für einen Fahrzeugkindersitz zur Aufnahme eines Kindes während eines Transports davon, wobei der Halter (1) derart ausgestaltet ist, dass er einen Sicherheitsgurt (14) des Fahrzeugs hält, wenn der Kindersitz daran montiert ist und ein längliches Element (20) umfasst, welches sich um und exzentrisch zu einem Halterungsdrehgelenk (24) dreht und in der Nähe eines Gegenelements (10) angeordnet ist, mit welchem das längliche Element zusammenwirkt, wenn es sich in seiner ersten Arbeitsstellung befindet, um den Sicherheitsgurt (14) zu halten, welcher in eine Aussparung (12) eingeführt ist, die zwischen dem länglichen Element (20) und dem Gegenelement (10) vorhanden ist, wobei das längliche Element (20) in der Lage ist, eine zweite Arbeitsstellung anzunehmen, in welcher es von dem Gegenelement (10) beabstandet ist, um den Zugang zu der Aussparung (12) für den Sicherheitsgurt (14) freizugeben, wobei der Halter (1) einen Körper (5) unabhängig von dem Kindersitz (2) umfasst, wobei der Körper (5) im Wesentlichen eine U-Form darstellt und einen ersten Arm (10) und einen zweiten Arm (11) aufweist, wobei der erste Arm (10) vor dem länglichen Element angeordnet ist und als Gegenelement arbeitet, um den Sicherheitsgurt wie eine Zange zu halten, wenn sich das längliche Element (20) in seiner ersten Arbeitsstellung befindet, wobei sich das längliche Element (20) in einer Aufnahme (30) des zweiten Arms (11) des Körpers (5) befindet und von dieser Aufnahme über eine Öffnung (31) hervorragt, welche in der Aussparung (12) zwischen den Armen (10, 11) des Körpers vorhanden ist, **dadurch gekennzeichnet, dass** das längliche Element (20) einen Vorsprungsteil (35) umfasst, welches als Griffabschnitt wirkt, um das Element gegenüber dem relativen Halterungsdrehgelenk (24) zu drehen.

2. Halter nach Anspruch 1, **dadurch gekennzeichnet, dass** das Halterungsdrehgelenk für das längliche Element (20) ein erster Arm (24) eines U-förmigen Bolzens (23) ist, wobei der erste Arm in ein Loch (21) des länglichen Elements (20) eingeführt ist, welches exzentrisch zu einer mittigen Längsachse (W) dieses letztgenannten vorhanden ist, wobei der Bolzen (23) einen zweiten Arm (25) umfasst, welcher in eine entsprechende Aufnahme (26) des ersten Arms (10) des Körpers (5) des Halters (1) eingeführt ist.

3. Halter nach Anspruch 2, **dadurch gekennzeichnet, dass** ein elastisches Rückstellelement (38) auf dem ersten Arm (24) des Bolzens (23) derart montiert ist, dass es einem Durchgang des länglichen Elements von seiner ersten Arbeitsstellung in seine zweite Arbeitsstellung entgegentritt und das Element in seine erste Stellung zurückholt, nachdem es sich in die zweite Arbeitsstellung bewegt hat.

4. Halter nach Anspruch 3, **dadurch gekennzeichnet, dass** das elastische Rückstellelement eine Spiralfeder (38) ist.

5. Halter nach Anspruch 4, **dadurch gekennzeichnet, dass** die Feder freie Enden (39, 42) umfasst, wobei ein erstes Ende (39) auf einem Teil (40) des Halterkörpers (5) aufliegt, wobei ein zweites Ende (42) fest bezüglich des länglichen Elements (20) angeordnet ist.

6. Halter nach Anspruch 1, **dadurch gekennzeichnet, dass** das längliche Element (20) zumindest teilweise mit einer Gummischicht (47) abgedeckt ist, welche mit dem Sicherheitsgurt (14) zusammenwirkt.

7. Halter nach Anspruch 1, **dadurch gekennzeichnet, dass** sein Körper (5) Vorsprünge (7) umfasst, welche derart ausgestaltet sind, dass sie zusammenwirkend mit entsprechenden Aufnahmen (8) in einem festen Abschnitt (3) des Kindersitzes einschnappen.

## Revendications

1. Dispositif de serrage pour un siège de véhicule de sécurité pour enfant pour contenir un enfant durant son transport, ledit dispositif de serrage (1) étant adapté pour retenir une ceinture de sécurité (14) dudit véhicule lorsque le siège de sécurité pour enfant est monté sur celui-ci et comprenant un élément oblong (20), tournant autour d'un pivot de support (24) de façon excentrique, positionné à proximité d'un contre-élément (10) avec lequel ledit élément oblong coopère lorsqu'il est dans sa première position de fonctionnement pour retenir ladite ceinture de sécurité (14) insérée dans un évidement (12) présent entre ledit élément oblong (20) et ledit contre-élément (10), l'élément oblong (20) étant capable de prendre une seconde position de fonctionnement dans laquelle il est espacé dudit contre-élément (10) pour libérer l'accès audit évidement (12) pour la ceinture de sécurité (14), le dispositif de serrage (1) comprenant un corps (5) indépendant du siège de sécurité pour enfant (2), ledit corps (5) présentant une forme sensiblement de U et possédant un premier bras (10) et un second bras (11), le premier bras (10) étant positionné devant l'élément oblong et servant de contre-élément pour retenir la ceinture de sécurité à la manière de tenailles lorsque ledit élément oblong (20) est dans sa première position de fonctionnement, ledit élément oblong (20) étant disposé dans un siège (30) du second bras (11) dudit corps (5) et faisant saillie à partir de ce siège par l'intermédiaire d'une ouverture (31) présente dans ledit évidement (12) entre les bras (10, 11) dudit corps, **caractérisé en ce que** l'élément oblong (20) comprend une partie saillante d'extrémité (35) servant de partie de préhension pour tourner ledit élément autour du pivot de support relatif (24).

2. Dispositif de serrage selon la revendication 1, **caractérisé en ce que** le pivot de support pour l'élément oblong (20) est un premier bras (24) d'une tige en forme de U (23), ledit premier bras étant inséré dans un orifice (21) dudit élément oblong (20) prévu de façon excentrique par rapport à un axe central longitudinal (W) de ce dernier, ladite tige (23) comprenant un second bras (25) inséré dans un siège correspondant (26) du premier bras (10) du corps (5) du dispositif de serrage (1).

3. Dispositif de serrage selon la revendication 2, **caractérisé en ce qu'**un élément de rappel élastique (38) est monté sur ledit premier bras (24) de la tige (23) pour s'opposer au passage de l'élément oblong de la première position de fonctionnement à la seconde position et pour ramener ledit élément dans ladite première position après qu'il s'est déplacé dans ladite seconde position de fonctionnement.

4. Dispositif de serrage selon la revendication 3, **caractérisé en ce que** l'élément de rappel élastique est un ressort hélicoïdal (38).

5. Dispositif de serrage selon la revendication 4, **caractérisé en ce que** ledit ressort comprend des extrémités libres (39, 42), une première extrémité (39) prenant appui sur une partie (40) du corps de dispositif de serrage (5), une seconde extrémité (42) étant rigide avec l'élément oblong (20).

6. Dispositif de serrage selon la revendication 1, **caractérisé en ce que** l'élément oblong (20) est au moins partiellement recouvert avec une couche de caoutchouc (47) qui coopère avec la ceinture de sécurité (14).

7. Dispositif de serrage selon la revendication 1, **caractérisé en ce que** son corps (5) comprend des saillies (7) agencées pour coopérer par encliquetage avec des sièges correspondants (8) dans une partie rigide (3) du siège de sécurité pour enfant.
